Europäisches Patentamt

European Patent Office

Office européen des brevets

(11) Numéro de publication: **0 194 912**
**A1**

## (12) DEMANDE DE BREVET EUROPEEN

(21) Numéro de dépôt: 86400374.4

(22) Date de dépôt: 21.02.86

(51) Int. Cl.⁴: **B23K 9/10 , B23K 9/06**

(30) Priorité: 22.02.85 FR 8502571

(43) Date de publication de la demande:
**17.09.86 Bulletin 86/38**

(84) Etats contractants désignés:
**AT BE CH DE GB IT LI LU NL SE**

(71) Demandeur: **LA JOIE**
**Route de Portbail**
**F-50390 Saint-Sauveur le Vicomte Manche(FR)**

(72) Inventeur: **La Joie, Daniel**
**Rue des Petits Pavés**
**F-50390 Saint-Sauveur-le-Vicomte(FR)**
Inventeur: **Boisson, Philippe**
**Hameau le Bigard Heauville**
**F-50340 Les-Pieux(FR)**

(74) Mandataire: **Chevallier, Robert Marie Georges et al**
**Cabinet BOETTCHER 23, rue La Boétie**
**F-75008 Paris(FR)**

(54) **Poste de soudure électrique à amorçage amélioré de l'arc.**

(57) Le transformateur (6) fournissant le courant de soudure est associé à des selfs saturables (5) faisant partie d'un circuit de saturation (10) dans lequel est monté un relais (16) qui est commandé simultanément à un relais principal de soudure cependant qu'un circuit d'amorçage de l'arc fournit une tension initiale de 4000 V au lieu de 2000 V, ce qui permet un bon amorçage de l'arc en supprimant toute cavité dans le début du cordon de soudure grâce à la montée progressive du courant de soudure par suite de la fermeture retardée du circuit de saturation des selfs (5).

Fig.1

EP 0 194 912 A1

Poste de soudure électrique à amorçage amélioré de l'arc

L'invention se rapporte à un poste de soudure électrique qui peut être du type avec ou sans gaz neutre et qui comprend en association avec un transformateur du courant de soudure, des selfs saturables et un circuit d'amorçage de l'arc à haute tension et à haute fréquence.

On connaît des postes de soudure de ce type. Les selfs sont saturées magnétiquement à un degré réglable au moyen d'une tension continue, ce qui permet de faire varier l'intensité du courant dans le circuit de soudage. Le circuit d'amorçage à haute tension et à haute fréquence favorise la création de l'arc à distance entre la pièce et l'électrode quand celle-ci s'approche de la pièce ; ce circuit comprend un transformateur qui fournit typiquement une tension à 2 000 V et à 150 Hz.

Avec les postes de soudure classiques de ce type, on observe constamment sur la partie débutante du cordon de soudure dans la zone de l'amorçage de l'arc une dépression qui a souvent l'apparence d'une cavité. Une telle dépression plus ou moins accentuée est indésirable principalement pour une question d'aspect. De toute façon elle constitue un défaut qui apparaît et se reconnaît bien sur les vues radiographiques des cordons de soudure.

L'invention a pour but principal de parvenir à un poste de soudure électrique amélioré avec lequel il ne se forme pas de dépression dans la zone de l'amorçage de l'arc au début des cordons de soudure.

Dans les postes de soudure connus, le circuit de saturation des selfs est mis en service dès le branchement du poste de soudure sur le réseau électrique d'alimentation avant même que le circuit principal de soudage soit mis en service effectif. On suppose que ceci est la cause de la cavité constatée parce qu'au moment de la mise en service du circuit principal, il se produit aussitôt un fort appel de courant et une fusion non contrôlée du métal.

Dans le poste de soudure ayant un transformateur du courant de soudure auquel sont associés des selfs saturables, un circuit de saturation de ces selfs, un circuit d'amorçage de l'arc à haute tension et à haute fréquence comprenant un transformateur, un relais principal de mise en serfice effectif du transformateur du courant de soudure, selon l'invention un moyen interrupteur est placé dans le circuit de saturation des selfs et ce moyen est branché pour être commandé simultanément audit relais principal, cependant que le circuit d'amorçage à haute tension et à haute fréquence est apte à fournir une tension d'amorçage de l'arc de 4000 V environ, se stabilisant ensuite à 2200 V.

De préférence, le moyen interrupteur est un relais incorporé au circuit de saturation des selfs et le circuit d'amorçage comprend un transformateur à fer saturé et à fuite qui fournit une tension initiale de 4000 V environ.

On donnera maintenant, sans intention limitative et sans exclure aucune variante, une description d'un mode de réalisation de l'invention. On se reportera aux dessins annexés dans lesquels :

-la figure 1 est un schéma partiel d'un poste de soudure conforme à l'invention montrant le transformateur du courant de soudure, les selfs saturables et le circuit de saturation de celles-ci,

-la figure 2 est un schéma partiel du même poste de soudure montrant le pont redresseur et le transformateur de haute tension à haute fréquence,

-les figures 3 et 4 sont des graphiques montrant l'évolution du courant de soudure et de la tension à haute fréquence en fonction du temps pendant l'amorçage de l'arc, avec un poste de soudure de construction classique,

-les figures 5 et 6 sont des graphiques analogues à ceux des figures 3 et 4 mais pour un poste à amorçage amélioré, conformément à l'invention

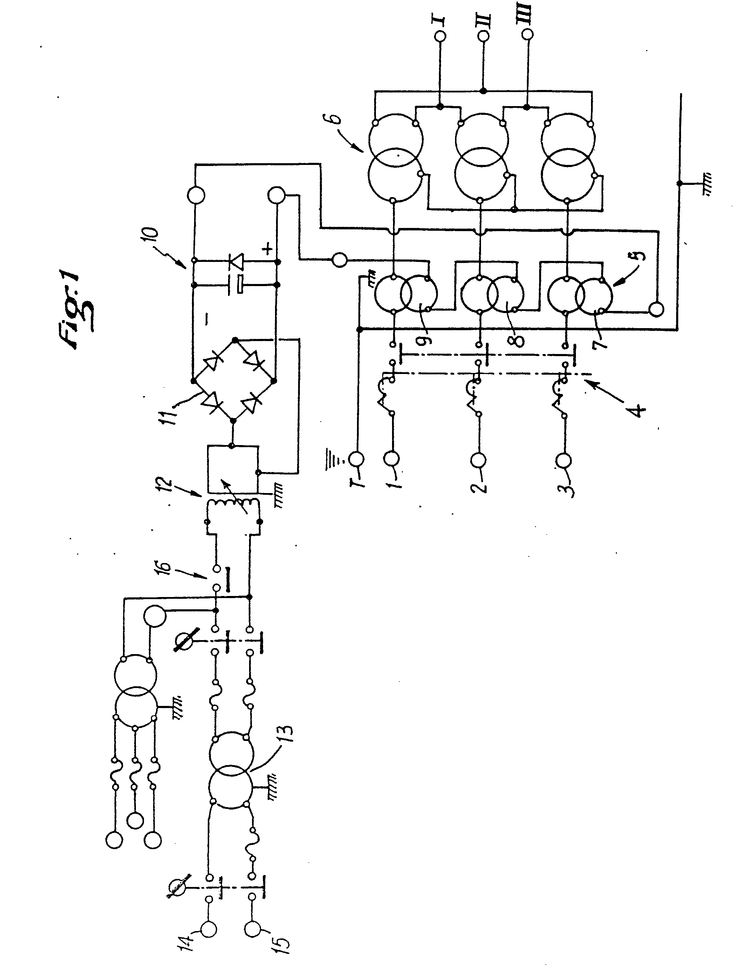

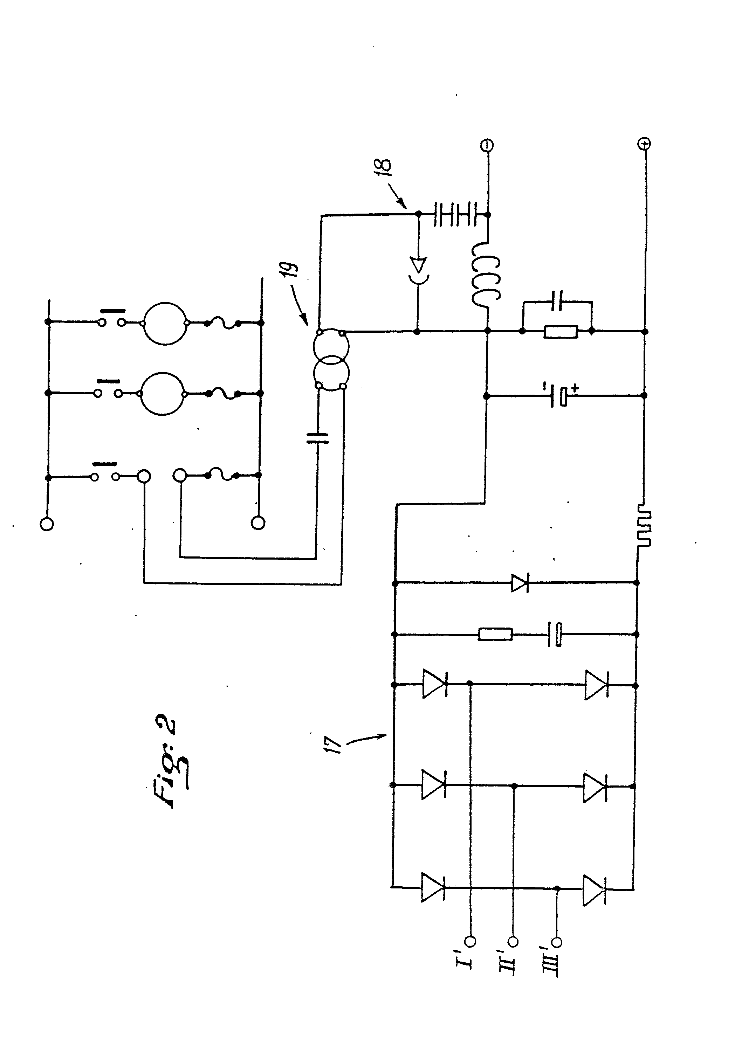

Les deux schémas des figures 1,2 se raccordent aux trois points marqués respectivement I,I' ; II,II' et III,III'.

Après trois bornes 1,2,3 qui permettent de brancher le poste de soudure à un réseau électrique triphasé 380 V, 50 Hz, se trouve un disjoncteur 4 suivi de trois selfs saturables 5 qui sont raccordées au primaire d'un transformateur de puissance 6. De ce dernier partent trois lignes conductrices qui se terminent aux points I, II, III.

Les trois selfs 5 comprennent des enroulements de saturation 7,8,9 qui sont montés en série dans un circuit de saturation 10 comprenant un condensateur de capacité élevée et un pont redresseur 11 réuni à un transformateur réglable 12. Ce dernier est relié à un premier transformateur d'alimentation 13 qui est branché directement par ses deux bornes 14,15 à deux lignes du réseau électrique à 380 V. Entre ce transformateur d'alimentation 13 et le transformateur réglable 12 est monté un relais 16, de sorte que ce dernier transformateur 12 n'est pas alimenté dès que le premier transformateur d'alimentation 13 est mis sous tension, mais seulement après la fermeture du relais 16.

Sur la figure 2 le schéma commence par les points I',II',III' de raccordement aux points I,II,III au schéma de la figure 1, après ces points on trouve un pont 17 de redressement du courant de soudure ; le circuit principal de soudure se termine par des bornes de sortie marquées + et -. Avant celles-ci est raccordé un circuit d'amorçage 18 qui comprend un transformateur 19 d'amorçage fournissant une tension élevée à haute fréquence qui facilite l'amorçage de l'arc. Selon l'invention, ce transformateur 19 n'est pas du type classique habituel dans les postes de soudure conçus pour fournir une tension d'amorçage de 2 200 V qui se stabilise rapidement à 2 000 V. Au contraire, le transformateur 19 est du type, connu en soi, dit à fer saturé et à fuite conçu pour fournir une tension d'amorçage initiale de 4 000 V. Cette valeur est environ le double de la tension que fournit un transformateur classique, mais en raison du type même de ce transformateur, elle se stabilise rapidement après amorçage à une valeur de 2 200 V voisine de la valeur classique.

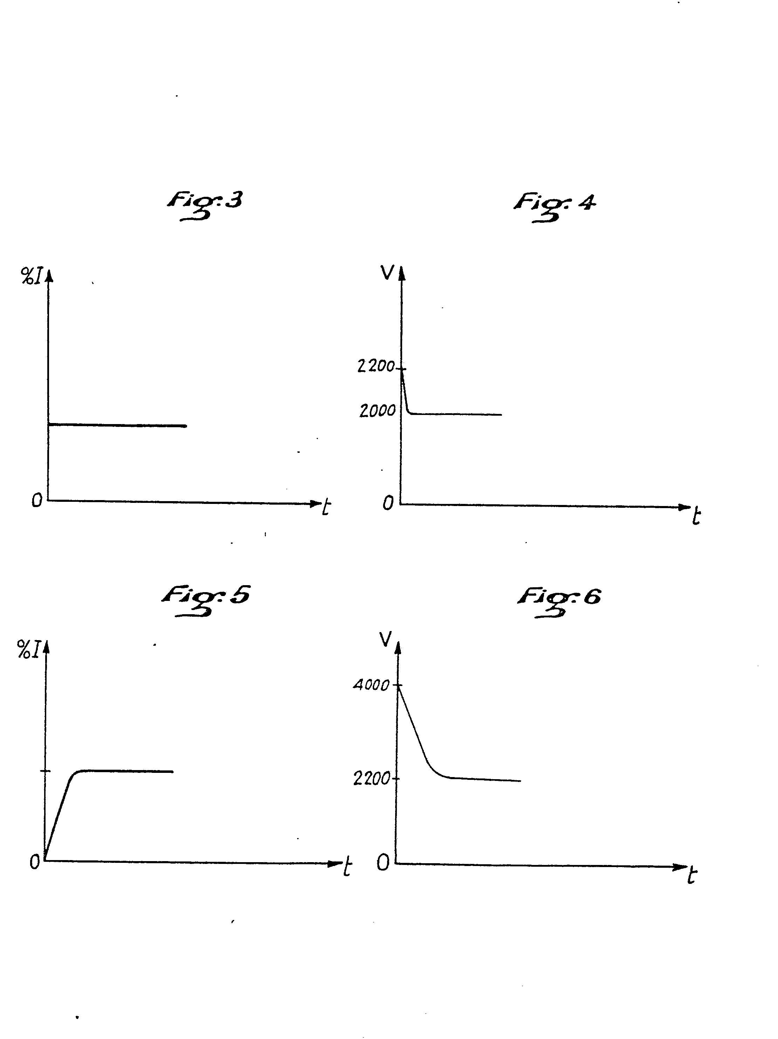

On expliquera maintenant le fonctionnement du poste de l'invention en se reportant aussi aux figures 3 à 6.

Au moment de la mise sous tension du poste de soudure quand on branche ses bornes 1 à 3 et 14,15 à un réseau d'alimentation, les selfs saturables 7, 8, 9 ne sont pas alimentées puisque le relais 16 est encore ouvert en amont du transformateur réglable 12. Ce n'est que lorsque le circuit principal est mis effectivement en service, de matière automatique juste avant l'exécution d'une soudure que le relais 16 est fermé et que la saturation des selfs 5 commence. Il en résulte que l'intensité du courant de soudure augmente progressivement d'une valeur proche de 0 à la valeur désirée, comme indiqué en pourcentage en ordonnées sur la figure 5, alors que, avec un poste classique, les selfs étant saturées dès la mise sous tension du poste, le courant est immédiatement à 100 % de la valeur désirée (figure 3). Cet accroissement progressif de la valeur de l'intensité du courant de soudure évite la formation d'une cavité indésirable au début du cordon de soudure, mais il a l'inconvénient de ne pas être favorable à un bon amorçage de l'arc par suite de la faiblesse initiale du courant principal. Le transformateur 19 a pour rôle d'éliminer cet inconvénient en fournissant une tension d'amorçage plus élevée (au moins 4000 V) qui descend rapidement à 2 200 V comme le montre la figure 6 où la tension est portée en ordonnées, alors que, avec un poste classique la tension initiale d'amorçage est de 2200 V seulement (figure 4).

Il est évident que, dans l'esprit de l'invention, l'alimentation des selfs 5 en courant de saturation, pourrait être retardée par une disposition différente du relais 16 dont le montage en amont du transformateur réglable 12 est préféré mais non obligatoire ; elle pourrait être retardée aussi par un moyen autre qu'un relais ainsi que l'homme de l'art le comprendra facilement.

De même, il est possible de se servir d'un moyen autre qu'un transformateur à fer saturé et à fuite pour obtenir une tension d'amorçage plus élevée que la tension d'amorçage classique et se stabilisant à la valeur classique de 2000 V environ. Une valeur plus forte que 4000 V est possible, mais elle provoquerait un amorçage prématuré de l'arc ; inversement une valeur inférieure à 4000 V serait possible aussi, mais ne compenserait pas totalement le retard apporté à la saturation des selfs.

**Revendications**

1. Poste de soudure à l'arc ayant un transformateur (6) du courant de soudure auquel sont associées des selfs saturables (5) alimentées en courant de saturation par un circuit de saturation (10) comprenant un transformateur variable - (12), ce poste comprenant aussi un relais principal de mise en service effectif dudit transformateur (6) ainsi qu'un circuit d'amorçage (18) à haute tension et haute fréquence, caractérisé en ce que le circuit de saturation (10) des selfs - (5) comprend un moyen interrupteur (16) commandé simultanément audit relais principal, cependant que le circuit d'amorçage (18) est apte à fournir une tension initiale d'amorçage élevée de l'ordre de 4000 V se stabilisant à 2200 V environ.

2. Poste de soudure selon la revendication 1 caractérisé en ce que le moyen interrupteur (16) est un relais incorporé au circuit de saturation.

3. Poste de soudure selon la revendication 2 caractérisé en ce que le relais (16) est monté à l'entrée du transformateur variable (12) du circuit de saturation.

4. Poste de soudure selon la revendication 1 caractérisé en ce que le circuit d'amorçage (18) comprend un transformateur (19) du type à fer saturé et à fuite fournissant une tension initiale de l'ordre de 4000 V.

0 194 912

Fig.1

Fig. 2

Fig. 3

Fig. 4

Fig. 5

Fig. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 096 633 (DECA) | | B 23 K 9/10 |
| | | | B 23 K 9/06 |
| A | US-A-4 049 946 (EUTECTIC) | | |

**DOMAINES TECHNIQUES RECHERCHES (Int. Cl.4)**

B 23 K

Le présent rapport de recherche a été établi pour toutes les revendications

| Lieu de la recherche | Date d'achèvement de la recherche | Examinateur |
|---|---|---|
| LA HAYE | 28-05-1986 | DEMOLDER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82